# EUROPÄISCHE PATENTSCHRIFT

(11) **EP 3 055 176 B1**
(45) Veröffentlichungstag und Bekanntmachung des Hinweises auf die Patenterteilung: **14.11.2018**
(21) Anmeldenummer: 14766158.1
(22) Anmeldetag: 12.09.2014
(51) Int. Cl.: F16B 9/02, B60T 11/16

(54) **HALTEBAUGRUPPE**
RETAINING ASSEMBLY
ENSEMBLE DE RETENUE

(30) Priorität: 11.10.2013 DE 102013220573; 31.01.2014 DE 102014201704
(43) Veröffentlichungstag der Anmeldung: 17.08.2016
(73) Patentinhaber: Continental Teves AG & Co. OHG, 60488 Frankfurt am Main (DE)
(72) Erfinder: TARANDEK, Kristijan, 63263 Neu-Isenburg (DE); SELLINGER, Thomas, 63303 Dreieich (DE); DROTT, Peter, 65936 Frankfurt/Main (DE); GÖRLACH, Johannes, 35428 Langgöns (DE); KRÄMER, Horst, 65462 Ginsheim-Gustavsburg (DE)
(86) Internationale Anmeldenummer: PCT/EP2014/069480
(87) Internationale Veröffentlichungsnummer: WO 2015/051973

(56) Entgegenhaltungen:
- FR-A1- 2 781 259

## Beschreibung

Die Erfindung betrifft eine Haltebaugruppe zur Fixierung eines an einem Bremsgerät vorgesehenen Flanschteils an einer Spritzwand eines Kraftfahrzeugs nach dem Oberbegriff des Patentanspruchs 1.

Eine Haltebaugruppe zur Fixierung eines an einem Bremsgerät vorgesehenen Flanschteils an einer Spritzwand eines Kraftfahrzeugs, die einen Motorraum von einem Fahrzeuginnenraum trennt, ist beispielhaft aus der DE 44 03 466 A1 bekannt. Die Haltebaugruppe weist zwei Stehbolzen auf, die vom Flanschteil des Bremsgeräts durch die Spritzwand in den Fahrzeuginnenraum eingeführt und vom Fahrzeuginnenraum verschraubt werden müssen. Der Aufwand zum Einbauen und wieder Entfernen des Bremsgeräts ist somit aufgrund der schlechten Zugänglichkeit der Spritzwand im Fahrzeuginnenraum erheblich. Überdies muss das Bremsgerät im Motorraum gleichzeitig abgestützt werden, um ein Verkanten und Herausfallen zu verhindern.

Die FR 2 781 259 A1 offenbart eine Haltebaugruppe für einen Hydraulikzylinder, der als Flanschteil einen umlaufenden Kragen aufweist, dem mehrere über dem Umfang des Hydraulikzylinders verteilt angeordnete Formschlusselemente vorgeordnet sind, die zur formschlüssigen Befestigung an einer Halteplatte durch einen mit der Halteplatte verbundenen Rohrkörper hindurchgeführt und anschließend mit mehreren, sich am Rohrkörper radial nach innen erstreckenden Formschlusselemente in Überdeckung gebracht werden, wozu das Flanschteil mit seinen radial nach außen gerichteten Formschlusselementen gegenüber den radial nach innen gerichteten Formschlusselementen des Rohrkörpers verdreht wird.

Es ist die Aufgabe der Erfindung, eine Haltebaugruppe der angegebenen Art dahingehend zu verbessern, dass mit möglichst geringem konstruktivem als auch funktionellem Aufwand eine besonders einfache und schnelle Montage des Bremsgeräts an der Spritzwand gewährleistet wird, wobei die Zuführung, Ausrichtung und Befestigung des Bremsgeräts mit einfachen Mitteln ausschließlich an der dem Motorraum zugewandten Seite der Spritzwand erfolgen soll.

Diese Aufgabe wird erfindungsgemäß für eine Haltebaugruppe der genannten Art durch die Merkmale des Patentanspruchs 1 gelöst.

Weitere Merkmale der Erfindung sind den einzelnen Patentansprüchen als auch aus der Beschreibung eines Ausführungsbeispiels anhand mehrerer Zeichnungen zu entnehmen.

Es zeigen:
- Figur 1: eine perspektivische Gesamtansicht einer mit den erfindungswesentlichen Merkmalen versehenen Haltebaugruppe zwecks Montage eines Bremsgeräts an einer Spritzwand eines Fahrzeugs,
- Fig. 2-4: Draufsichten auf die Haltebaugruppe mit der Darstellung einzelner Montageschritte zur Befestigung eines das Bremsgerät tragenden Flanschteils an einer mit der Spritzwand verbundenen Halteplatte,
- Figur 5: eine perspektivische Schnittdarstellung durch die Haltebaugruppe nach der Endfixierung des Flanschteils an der Halteplatte.

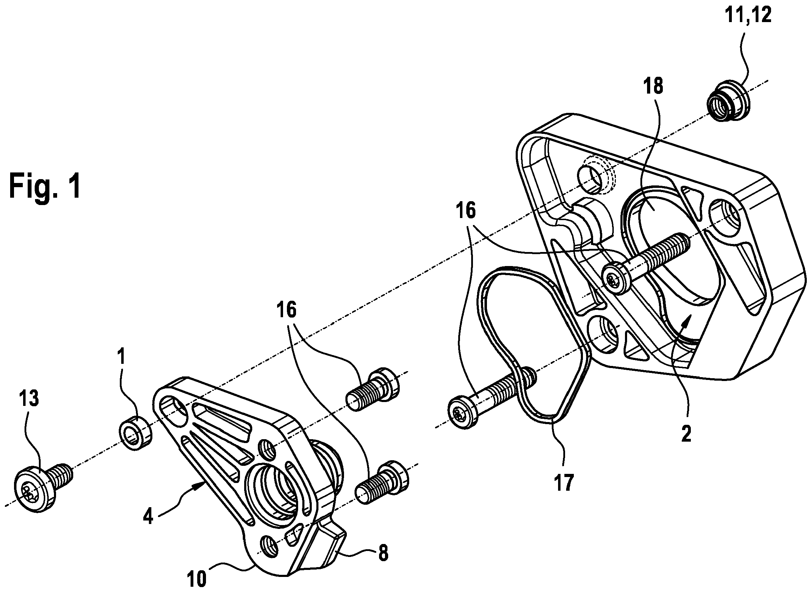

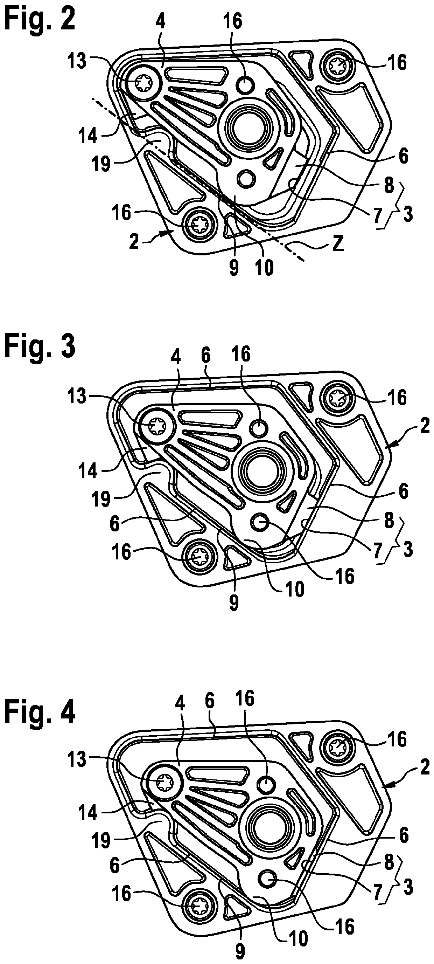

Die Figur 1 zeigt in einer Perspektivansicht die wesentlichen Einzelheiten einer Haltebaugruppe zur Fixierung eines an einem Bremsgerät befestigten Flanschteils 4 an einer Halteplatte 2, die mit einer nicht abgebildeten Spritzwand eines Kraftfahrzeugs fest verschraubt ist, welche einen Motorraum von einem Fahrzeuginnenraum trennt. Die Halteplatte 2 und das Flanschteil 4 werden mittels einer Formschlussverbindung 3 miteinander gekoppelt, was im Nachfolgenden anhand der Figuren 2-5 verdeutlicht ist.

Die Figur 1 zeigt zunächst das durch zwei Schrauben 16 am nicht dargestellten Bremsgerät zu befestigende Flanschteil 4 als auch die Befestigung der Halteplatte 2 an der nicht abgebildeten Spritzwand mittels zweier Halteschrauben 16, wozu in der Regel innerhalb des Fahrzeuginnenraums ein Pedalbock an der Spritzwand angeordnet wird, in den die beiden Halteschrauben 16 nach dem Einfügen in die beiden Durchgangsbohrungen der Halteplatte 2 zur Befestigung der Halteplatte 2 hineingedreht werden. Zwischen der Halteplatte 2 und der Spritzwand sowie zwischen der Halteplatte 2 und dem Flanschteil 4 ist zum Schutz gegen eindringende Feuchtigkeit und Schmutz jeweils eine Dichtung 17 angeordnet.

Wie aus den Figuren 2, 3, 4 jeweils in einer Draufsicht auf die Haltebaugruppe hervor geht, ist diametral zur Formschlussverbindung 3 eine in allen Einzelheiten erkennbare Kraftschlussverbindung 5 an der Haltebaugruppe vorgesehen, die als wesentliches Element eine in allen Figuren abgebildete Endfixierschraube 13 aufweist.

Erst nach dem Einfügen und dem Verschieben des Flanschteils 4 innerhalb einer beckenförmigen Vertiefung der Halteplatte 2 in Richtung der Formschlussverbindung 3 (siehe Fig. 2, 3) steht das Flanschteil 4 nach der Herstellung der Formschlussverbindung 3 mit der Halteplatte 2 schließlich in einer durch die Endfixierschraube 3 dauerhaft hergestellten Verbindung (siehe Fig. 4), die jedoch nach dem Entfernen der Endfixierschraube 13 ebenso leicht wieder gelöst werden kann.

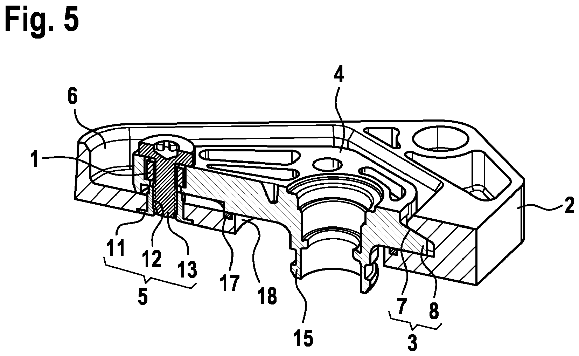

Zur Darstellung der erfindungswesentlichen Merkmale wurde in den gewählten Draufsichten nach den Fig. 2-4 auf die Abbildung des mit dem Flanschteil 4 fest verbundenen Bremsgeräts verzichtet, da das Bremsgerät in der Praxis den Flanschteil 4 überdeckt. Wegen des für die beiden Halteschrauben 16 und der Endfixierschraube 13 erforderlichen Platzbedarfs ist der Außenumfang der asymmetrisch gestalteten Halteplatte 2 großzügig radial erweitert. Zur versenkten Aufnahme des Flanschteils 4 innerhalb der Halteplatte 2 weist die Halteplatte 2 eine beckenförmige Vertiefung zwischen den in die Halteplatte 2 diagonal eingefügten beiden Halteschrauben 16 auf, wobei die beckenförmige Vertiefung von einem umlaufenden Rahmen 6 begrenzt ist, der an die asymmetrische Kontur des Flanschteils 4 angenähert ist. Aufgrund der asymmetrischen Stirnflächenkontur des Flanschteils 4 erstreckt sich das Flanschteil 4 zur gut zugänglichen Aufnahme und Befestigung der in der beckenförmigen Vertiefung vorgesehenen Endfixierschraube 13 zwischen den beiden Halteschrauben 16 der Halteplatte 2 laschenartig radial nach außen
Die Halteplatte 2 nimmt somit zum Zwecke einer platzsparenden Schnellbefestigung das Flanschteil 4 innerhalb der beckenförmigen Vertiefung auf, wobei zwecks einer möglichst einfachen Formschlussverbindung 3 mit der Halteplatte 2 das Flanschteil 4 abschnittsweise von dem die Vertiefung begrenzenden Rahmen 6 kontaktiert ist. Diametral zur Formschlussverbindung 3 ist an dem Flanschteil 4 die Endfixierschraube 13 fixiert, welche die aus der Figur 5 deutlich erkennbare Kraftschlussverbindung 5 mit der Halteplatte 2 herstellt, die gemäß den in den Figuren 2-4 abgebildeten Montageschritten erst nach der präzisen Ausrichtung des Flanschteils 4 an der Halteplatte 2 zustande kommt.
Zur zweckmäßigen Ausbildung der Formschlussverbindung 3 ist der dickwandige Rahmen 6 auf der von der Kraftschlussverbindung 5 abgewandten Seite mit einer bevorzugt als Nut 7 gestalteten Ausnehmung versehen, in die ein am Außenumfang des Flanschteils 4 in Form einer Klinke oder eines Keils ausgebildeter radialer Vorsprung 8 eingreift. Die Figuren 2-4 verdeutlichen hierzu einzelne Eingriffspositionen des keilförmigen Vorsprungs 8 in der Nut 7 nach dem Zuführen und Ausrichten des mit dem Bremsgerät verbundenen Flanschteils 4 innerhalb der beckenförmigen Vertiefung der Halteplatte 2.

Wie in Anspruch 1 offenbart, zur präzisen formschlüssigen Ausrichtung des Flanschteils 4 innerhalb der beckenförmigen Vertiefung der Halteplatte 2 weist die Halteplatte 2 entlang dem unteren Abschnitt des Rahmens 6 eine linear in Einschubrichtung des Flanschteils 4 verlaufende Stützkante 9 auf, die unterhalb als auch näherungsweise orthogonal ausgerichtet zur Nut 7 von einem am Außenumfang des Flanschteils 4 vorgesehenen weiteren Vorsprung 10 kontaktiert ist. Die Stützkante 9 ist somit nach Art einer schiefen Ebene unterhalb des Flanschteils 4 durch einen parallel zur Verschieberichtung des Flanschteils 4 schräg nach unten verlaufenden Linearabschnitt des Rahmens 6 gebildet (siehe Hilfslinie Z in Fig. 2), sodass nach dem Einfügen des Flanschteils 4 in die beckenförmige Vertiefung der Vorsprung 10 das Flanschteil 4 entlang der Hilfslinie Z kontaktiert und während dem Herabgleiten in der beckenförmigen Vertiefung der Halteplatte 2 zwangsläufig linear entlang des schräg nach unten verlaufenden Rahmens 6 geführt ist, womit das Flanschteil 4 mit dem daran befestigten Bremsgerät mit seinem keilförmigen Vorsprung 8 unterstützt durch die Gewichtskraft präzise der im Rahmen 6 vorgesehenen Nut 7 zugeführt wird.

Wie weiterhin aus den Figuren 2-4 hervor geht, ist an dem schräg nach unten gerichteten Linearabschnitt des Rahmens 6 eine nutförmige Schwertaufnahme 19 vorgesehen, die mit einem unterhalb der Endfixierschraube 13 am Umfang des Flanschteils 4 hervorstehenden Schwert 14 in Eingriff steht, sobald der keilförmige Vorsprung 8 in die Nut 7 gelangt.

Somit erfolgt die Ausrichtung des Flanschteils 4 an der Halteplatte 2 prinzipiell mittels einer Dreipunktlagerung im Rahmen 6, indem das Schwert 14 und die näherungsweise orthogonal zueinander ausgerichteten beiden Vorsprüngen 8, 10 den Rahmens 6 kontaktieren. Die in der Figur 4 abgebildete Endfixierung des Flanschteils 4 an der Halteplatte 2 übernimmt schließlich die oberhalb des Schwerts 14 vorgesehene Endfixierschraube 13, die während des gesamten Montageprozesses bereits vormontiert im Flanschteil 4 verharrt.

Ausgehend von der Darstellung in Figur 4 verdeutlicht die Perspektivdarstellung nach Figur 5 zusätzlich ein in der Halteplatte 2 vorgesehenes Innengewinde 12, das sich als ein Element der Kraftschlussverbindung 5 in diametraler Ausrichtung zu den beiden Elementen (Nut 7, Vorsprung 8) der Formschlussverbindung 3 in einer Gewindehülse 11 befindet, die sich mit ihrem Bund in einer Bohrung der Halteplatte 2 abstützt. Als wesentlicher Bestandteil der Kraftschlussverbindung 5 ist die Endfixierschraube 13 aus der Richtung des Bremsgeräts bereits in einer Durchgangsbohrung im Flanschteil 4 eingefügt und in gut zugänglich in die Gewindehülse 11 eingedreht.

Ferner ist aus der Figur 5 ein in der Durchgangsbohrung des Flanschteils 4 eingesetzter Haltering 1 zu erkennen, der vorteilhaft eine sichere Vormontage der Endfixierschraube 13 am Flanschteil 4 ermöglicht, indem gemäß den vorangegangenen Figuren 1-4 bereits vor der endgültigen Ausrichtung des Flanschteils 4 an der Halteplatte 2 die Endfixierschraube 13 am Flanschteil 4 reibschlüssig im Haltering 1 aufgenommen ist.

Um einen sichere Aufnahme der Endfixierschraube 13 im Haltering 1 als auch eine sichere Aufnahme des Halterings 1 im Flanschteil 4 zu gewährleisten, besteht der Haltering 1 vorzugsweise aus einem elastischen Kunststoff oder aus einem Kautschuk, der mit dem Flanschteil 4 als auch mit der Endfixierschraube 13 die erforderliche Reibschlussverbindung herstellt.

Weiterhin geht aus der Figur 5 deutlich hervor, dass das Flanschteil 4 als eine abschnittsweise an die Innenkontur der Halteplatte 2 angepasste Platte ausgeführt ist, die zum Hindurchführen einer Pedalstange mit einem rohrförmigen Fortsatz 15 versehen ist, der sich durch eine langlochförmige oder ovale Öffnung 18 in der Halteplatte 2 hindurch erstreckt, wobei die langloch- oder ovalförmige Öffnung 18 an das zur Montage des Flanschteils 4 an der Halteplatte 2 notwendige radiale Verschiebemaß des Flanschteils 4 (siehe Montageschritte in Fig. 2-4) angepasst ist.

Die Halteplatte 2 und das Flanschteil 4 bestehen aus einem kostengünstig herzustellenden Gusswerkstoff, insbesondere aus einem Leichtmetalldruckguss, sodass eine Haltevorrichtung geschaffen ist, die hinsichtlich des Vorsprungs 10 einfach auszubilden ist als auch innerhalb der Formschlussverbindung 3 (im Bereich des Vorsprungs 8 und der Nut 7) einfach darzustellende schräge Kontaktflächen aufweist, um die Formschlussverbindung 3 in der Endfixierung des Flanschteils 4 an der Halteplatte 2, insbesondere in Axialrichtung des Bremsgeräts, spielfrei ausführen zu können.

Eine zusätzliche Montageerleichterung folgt aus der Aufnahme der Endfixierschraube 13 im Haltering 1 des Flanschteils 4, wodurch eine Verwechselung mit anderen Schrauben ausgeschlossen werden kann und das Bremsgerät sofort in der endgültigen Ausrichtung des Flanschteils 4 an der Halteplatte 2 festgeschraubt werden kann. Überdies erleichtert die Aufnahme der Endfixierschraube 13 im Haltering 1 das Auffinden des Gewindes 12 in der Halteplatte 2.

### Bezugszeichenliste

- 1: Haltering
- 2: Halteplatte
- 3: Formschlussverbindung
- 4: Flanschteil
- 5: Kraftschlussverbindung
- 6: Rahmen
- 7: Nut
- 8: Vorsprung
- 9: Stützkante
- 10: Vorsprung
- 11: Gewindehülse
- 12: Gewinde
- 13: Endfixierschraube
- 14: Schwert
- 15: Fortsatz
- 16: Halteschraube
- 17: Dichtung
- 18: Öffnung
- 19: Schwertaufnahme

## Patentansprüche

1. Haltebaugruppe zur Fixierung eines an einem Bremsgerät vorgesehenen Flanschteils (4) an einer Spritzwand eines Kraftfahrzeugs, die einen Motorraum von einem Fahrzeuginnenraum trennt, wobei an der dem Motorraum zugewandten Seite der Spritzwand eine Halteplatte (2) befestigt ist, die innerhalb einer Vertiefung das Flanschteil (4) aufnimmt, das zur Führung und zwecks einer Formschlussverbindung (3) mit der Halteplatte (2) abschnittsweise von einem die Vertiefung begrenzenden Rahmen (6) kontaktiert ist, der mit einer Nut (7) versehen ist, in die ein am Außenumfang des Flanschteils (4) ausgebildeter radialer Vorsprung (8) eingreift, **dadurch gekennzeichnet, dass** die Halteplatte (2) entlang einem unteren Abschnitt des Rahmens (6) eine linear in Einschubrichtung des Flanschteils (4) verlaufende Stützkante (9) aufweist, die nach Art einer schiefen Ebene unterhalb des Flanschteils (4) durch einen parallel zur Verschieberichtung des Flanschteils (4) schräg nach unten verlaufenden Linearabschnitt des Rahmens (6) gebildet ist, sodass nach dem Einfügen des Flanschteils (4) in die beckenförmige Vertiefung der Halteplatte (2) ein am Außenumfang des Flanschteils (4) vorgesehener weiterer Vorsprung (10) entlang der beckenförmigen Vertiefung der Halteplatte (2) in dem schräg nach unten verlaufenden Rahmen (6) herabgleitet, wodurch der weitere Vorsprung (10) zwangsläufig linear entlang des schräg nach unten verlaufenden Rahmens (6) geführt ist, wobei unterstützt durch die Gewichtskraft das mit dem Bremsgerät verbundene Flanschteil (4) mit seinem Vorsprung (8) der Nut (7) im Rahmen (6) zugeführt ist.

2. Haltebaugruppe nach Anspruch 1, **dadurch gekennzeichnet, dass** zur Befestigung des Flanschteils (4) an der Halteplatte (2) diametral zur Formschlussverbindung (3) eine Kraftschlussverbindung (5) vorgesehen ist.

3. Haltebaugruppe nach Anspruch 1, **dadurch gekennzeichnet, dass** der am Außenumfang des Flanschteils (4) ausgebildete radiale Vorsprung (8) in Form einer Klinke oder eines Keils in die Nut (7) eingreift.

4. Haltebaugruppe nach Anspruch 1, **dadurch gekennzeichnet, dass** die Stützkante (9) näherungsweise orthogonal ausgerichtet zur Nut (7) von einer am Außenumfang des Flanschteils (4) vorgesehenen weiteren Vorsprung (10) kontaktiert ist.

5. Haltebaugruppe nach Anspruch 1, **dadurch gekennzeichnet, dass** die Stützkante (9) unterhalb der Formschlussverbindung (3) durch den parallel zur Verschieberichtung des Flanschteils (4) innerhalb der Vertiefung der Halteplatte (2) schräg nach unten verlaufender Linearabschnitt des Rahmens (6) gebildet ist.

## Claims

1. Retaining subassembly for fixing a flange portion (4) which is provided on a brake device to a bulkhead of a motor vehicle which separates an engine compartment from a vehicle inner space, wherein at the side of the bulkhead facing towards the engine compartment there is secured a retention plate (2) which receives inside a recess the flange portion (4) which in order to guide and to form a positive-locking connection (3) with the retention plate (2) is partially contacted by a frame (6) which delimits the recess, which frame is provided with a groove (7) in which a radial projection (8) which is formed on the outer periphery of the flange portion (4) engages, **characterized in that** the retention plate (2) has, along a lower portion of the frame (6), a support edge (9) which extends in a linear manner in the introduction direction of the flange portion (4) and which is formed in the manner of an oblique plane below the flange portion (4) by a linear portion of the frame (6) extending parallel with the displacement direction of the flange portion (4) in an oblique downward manner such that, after the flange portion (4) has been introduced into the basin-like recess of the retention plate (2), a further projection (10) provided on the outer periphery of the flange portion (4) slides down along the basin-like recess of the retention plate (2) in the frame (6) extending in an oblique downward manner, whereby the further projection (10) is positively guided linearly along the frame (6) extending in an oblique downward manner, wherein the flange portion (4) with the brake device secured thereto is, in a manner supported by gravitational force, supplied with the projection (8) thereof to the groove (7) in the frame (6).

2. Retaining subassembly according to Claim 1, **characterized in that**, in order to secure the flange portion (4) to the retention plate (2), a non-positive-locking connection (5) is provided diametrically with respect to the positive-locking connection (3).

3. Retaining subassembly according to Claim 1, **characterized in that** the radial projection (8) which is formed on the outer periphery of the flange portion (4) engages in the form of a detent or a wedge into the groove (7).

4. Retaining subassembly according to Claim 1, **characterized in that** the support edge (9) is contacted in a manner orientated substantially orthogonally with respect to the groove (7) by an additional projection (10) which is provided on the outer periphery of the flange portion (4).

5. Retaining subassembly according to Claim 1, **characterized in that** the support edge (9) below the positive-locking connection (3) is formed by means of the linear portion of the frame (6), which portion extends in an oblique manner downward parallel with the displacement direction of the flange portion (4) inside the recess of the retention plate (2).

## Revendications

1. Ensemble de retenue pour la fixation d'une partie de bride (4) prévue sur un appareil de frein à un tablier d'auvent d'un véhicule automobile, qui sépare un compartiment moteur d'un habitacle de véhicule, dans lequel une plaque de retenue (2) est fixée sur le côté du tablier d'auvent tourné vers le compartiment moteur, laquelle contient dans un creux la partie de bride (4) qui est en contact avec un cadre (6) limitant le creux pour le guidage et pour un assemblage par emboîtement (3) avec la plaque de retenue (2), le cadre étant doté d'une rainure (7) dans laquelle s'engage une saillie radiale (8) formée à la périphérie extérieure de la partie de bride (4), **caractérisé en ce que** la plaque de retenue (2) présente le long d'une partie inférieure du cadre (6) un bord d'appui (9) s'étendant linéairement dans la direction d'introduction de la partie de bride (4), qui est formé à la manière d'un plan oblique en dessous de la partie de bride (4) par une partie linéaire du cadre (6) s'étendant en oblique vers le bas parallèlement à la direction de déplacement de la partie de bride (4), de telle manière qu'après l'introduction de la partie de bride (4) dans le creux en forme de bassin de la plaque de retenue (2) une autre saillie (10) prévue à la périphérie extérieure de la partie de bride (4) glisse le long du creux en forme de bassin de la plaque de retenue (2) dans le cadre (6) s'étendant en oblique vers le bas, l'autre saillie (10) étant ainsi guidée obligatoirement de façon linéaire le long du cadre (6) s'étendant en oblique vers le bas, dans lequel la partie de bride (4) assemblée à l'appareil de frein est envoyée avec l'assistance de la pesanteur avec sa saillie (8) à la rainure (7) dans le cadre (6).

2. Ensemble de retenue selon la revendication 1, **caractérisé en ce qu'**il est prévu un assemblage par adhérence (5) diamétralement opposé à l'assemblage par emboîtement (3) pour la fixation de la partie de bride (4) à la plaque de retenue (2).

3. Ensemble de retenue selon la revendication 1, **caractérisé en ce que** la saillie radiale (8) formée à la périphérie extérieure de la partie de bride (4) s'engage à la manière d'un cliquet ou d'un coin dans la rainure (7).

4. Ensemble de retenue selon la revendication 1, **caractérisé en ce que** le bord d'appui (9) orienté approximativement orthogonalement à la rainure (7) est en contact avec une autre saillie (10) prévue à la périphérie extérieure de la partie de bride (4).

5. Ensemble de retenue selon la revendication 1, **caractérisé en ce que** le bord d'appui (9) en dessous de l'assemblage par emboîtement (3) est formé par la partie linéaire du cadre (6) s'étendant en oblique vers le bas parallèlement à la direction de déplacement de la partie de bride (4) à l'intérieur du creux de la plaque de retenue (2).
